Europäisches Patentamt

European Patent Office

Office européen des brevets

(11) Veröffentlichungsnummer: **0 413 362 A1**

## (12) EUROPÄISCHE PATENTANMELDUNG

(21) Anmeldenummer: 90115832.9

(22) Anmeldetag: 17.08.90

(51) Int. Cl.⁵: **C12C 7/14**

(30) Priorität: 17.08.89 DE 3927173

(43) Veröffentlichungstag der Anmeldung:
**20.02.91 Patentblatt 91/08**

(84) Benannte Vertragsstaaten:
**DE FR GB IT**

(71) Anmelder: **Anton Steinecker Entwicklungs GmbH & Co.
Postfach 1853**

**W-8050 Freising(DE)**

(72) Erfinder: **Schünhoff, Herbert
Barkausenstrasse 35
D-3120 Wittingen 1(DE)**

(74) Vertreter: **Patentanwälte Grünecker,
Kinkeldey, Stockmair & Partner
Maximilianstrasse 58
D-8000 München 22(DE)**

(54) Vorrichtung und Verfahren zur Verringerung der Feststoffanteile bei der Würzgewinnung zum Brauen von Bier.

㊗
1. Vorrichtung und Verfahren zur Verringerung von Feststoffanteilen bei der Würzegewinnung zum Brauen von Bier.

2.1 In Abhängigkeit von den Betriebsbedingungen kann die einen Läuterbottich oder ein am Maischefilter verlassende Würze hohe Feststoffgehalte aufweisen. Hohe Feststoffgehalte führen aber zu erhöhten Jodwerten und erhöhten Fettsäuregehalten. Dadurch wird die Geschmacksstabilität des Bieres verschlechtert. Die neue Vorrichtung und das neue Verfahren sollen durch einfachen Umbau der bestehenden Anlage zu Würzen mit niedrigem Trubstoffgehalt führen.

2.2 Dem Läuterbottich ist zur Trennung von Trubstoff und Würze ein Abscheider nachgeschaltet mit einer unteren beruhigten Zone, in der sich der Trubstoff anreichert, und einer die trubstofffreie Würze aufnehmenden, oberen Zone, so daß am Kopf des Abscheiders die nahezu trubstofffreie Würze und am Boden des Abscheiders der Trubstoff abführbar ist.

2.3 Würzegewinnung zum Brauen von Bier.

# VORRICHTUNG UND VERFAHREN ZUR VERRINGERUNG DER FESTSTOFFANTEILE BEI DER WÜRZEGEWINNUNG ZUM BRAUEN VON BIER

Die Erfindung bezieht sich auf eine Vorrichtung und ein Verfahren zur Verringerung der Feststoffanteile bei der Würzegewinnung zum Brauen von Bier nach dem Oberbegriff des Patentanspruchs 1 bzw. nach dem Oberbegriff des Patentanspruchs 9.

Eine solche Vorrichtung und ein solches Verfahren sind aus der Praxis bekannt. Die aus dem Malzschrot und Wasser bzw. Maische enthaltenden Behälter abgezogene fest- bzw. trubstoffbeladene Würze kann in Abhängigkeit von den Betriebsparametern relativ hohe Feststoffgehalte aufweisen. Diese führen zu erhöhten Jodwerten der Ausschlagwürze und zu erhöhten Fettsäuregehalten. Daraus resultiert letztlich eine verschlechterte Geschmacksstabilität des fertigen Bieres.

Der Erfindung liegt die Aufgabe zugrunde, eine Vorrichtung und ein Verfahren der eingangs angegebenen Art zu schaffen, mit deren Hilfe ein Reduzieren des Feststoffgehaltes in der Würze in vorhandenen Anlagen einfach und kostengünstig möglich ist.

Diese Aufgabe wird erfindungsgemäß bei einer Vorrichtung und einem Verfahren der obenangegebenen Art vorrichtungsseitig durch die kennzeichnenden Merkmale des Patentanspruchs 1 und verfahrensseitig durch die kennzeichnenden Merkmale des Patentanspruchs 9 gelöst.

Ein solcher Abscheider kann ohne gravierende Umbaumaßnahmen unproblematisch und ohne große Standzeiten in bestehende Anlagen eingebaut werden. Günstig ist dabei, daß sich der spezifisch schwerere Stoff, d.h. der Stoff mit der größeren Dichte, unter dem Einfluß der Gravitationskraft sozusagen von selbst in der unteren Zone ablagert, während die im Verhältnis zum Trubstoff spezifisch leichtere Würze sich in der oberen Zone anreichert. Mit Hilfe der unteren, beruhigten Zone des Abscheiders steht dem zu trennenden Gemisch genügend Zeit zu einer Stofftrennung in die einzelnen Komponenten zur Verfügung. Ein solcher Abscheider arbeitet deshalb sehr kostengünstig, da keine bewegten Teile verwendet werden müssen und nur geringe Wartungs- und Reparaturkosten auftreten. Nach erfolgter Stofftrennung kann deshalb der Trubstoff in der unteren und die nahezu trubstofffreie Würze in der oberen Zone abgezogen werden.

Günstig ist ferner, eine Zuführleitung mit querschnittsmäßig erweitertem Ende in dem vertikal aufgestellten Abscheider vorzusehen. Eine Erweiterung der Querschnittsfläche führt bei gleichem Durchsatz automatisch zu einer Verringerung der Strömungsgeschwindigkeit, was sich zusätzlich positiv auf die Stofftrennung auswirkt. Bei hohen Strömungsgeschwindigkeiten besteht nämlich die Gefahr, daß mit der den Abscheider verlassenden Flüssigkeit die schwereren Fest- bzw. Trubstoffe mitgerissen werden und sich infolgedessen nicht oder nur schlecht in der unteren, beruhigten Zone ablagern können. Reduzierte Strömungsgeschwindigkeiten führen deshalb zu einer besseren Zerlegung des Gemisches in seine einzelnen Komponenten, d.h. zu einem höheren Trennwirkungsgrad. Günstig ist ferner die Längsachse des Abscheiders vertikal anzuordnen, da sich auf diese Weise ein relativ geringer Platzbedarf in Bezug auf die benötigte Grundfläche ergibt. Andererseits weisen die Hallen und Gebäude, in denen die Anlagen zum Brauen von Bier untergebracht ist, relativ große Bauhöhen auf, so daß in aller Regel relativ schlanke, hohe Apparate besser als flache mit großem Grundflächenbedarf aufgestellt werden können.

Zweckmäßig ist ferner, am erweiterten Ende der Zuführleitung ein glockenförmiges Umlenkelement vorzusehen, das das erweiterte Ende unter Ausbildung eines Überlappungsbereichs überdeckt. Dadurch wird bei senkrecht angeordnetem erweiterten Ende die mit Trubstoff beladene Würze um 180° nach unten umgelenkt, so daß der Trubstoff unter Beibehaltung der Strömungsrichtung lediglich nach unten in die beruhigte Zone absinken muß. Die trubstofffreie Flüssigkeit reichert sich oberhalb der trubstoffreichen beruhigten Zone an und wird üblicherweise am Kopf des Abscheiders abgezogen. Aufgrund der größeren Querschnittsfläche kann das Umlenkelement das erweiterte Ende unter Ausbildung eines Überlappungsbereichs überdecken. Um die Strömungsgeschwindigkeit der trubstoffbeladenen Würze nicht weiter zu erhöhen, sollte die Ringfläche zwischen dem Umlenkelement und dem erweiterten Ende der Zuführleitung der Querschnittsfläche des erweiterten Endes zumindest entsprechen.

Zweckmäßig ist außerdem, wenn die Unterseite des Umlenkelementes oberhalb der beruhigten Zone endet, da andernfalls der in der beruhigten Zone angereicherte Feststoff durch die in den Abscheider eingeleitete Feststoff enthaltende Würze aufgewirbelt wird und in die obere Zone gelangen kann. Eine solche Aufwirbelung würde aber zu einer unerwünschten Rückvermischung von Fest- bzw. Trubstoff und trubstofffreier Würze führen.

Mit Hilfe des im Kopf des Abscheiders oberhalb der Unterseite des Umlenkelementes angeordneten Überlaufs zum Abführen der nahezu trubstofffreien Würze ist eine weitgehende Trennung der trubstoffbeladenen Würze ermöglicht, da der Trubstoff seine nach unten gerichtete Strömungsrichtung beibehalten kann, während die Flüssigkeit durch den mittels des Überlaufs entstehenden Soges nach oben umgelenkt wird. Eine solche Umlenkung der Stömungsrichtung steigert zusätzlich den Abscheidewirkungsgrad des Abscheiders. Ein Mitreißen von Trubstoffteilchen durch die Würze in die obere Zone ist damit weitgehend ausgeschlossen. Somit ergibt sich ein um so höherer Abscheidewirkungsgrad, je weiter der Überlauf von der Unterseite des Umlenkelements entfernt ist. Zwecks einer Optimierung des Abscheiders ist es deshalb besonders günstig, den Überlauf oberhalb des erweiterten Endes der Zuführleitung, vorzugsweise 20 mm unterhalb eines den Abscheider verschließenden Deckels, anzuordnen. Auf der einen Seite ist der Überlauf dadurch relativ weit von der Unterseite des Umlenkelementes entfernt; auf der anderen Seite weist der Abscheider keine zu große Bauhöhe auf, wenn der Überlauf nur geringfügig oberhalb des erweiterten Endes der Zuführleitung angeordnet ist. Bei einer solchen Anordnung ist der Abscheider vollständig mit Würze gefüllt, so daß es nicht zu einer unerwünschten Sauerstoffaufnahme der Würze kommen kann.

Bei einer anderen Ausführungsform wird die Sauerstoffaufnahme dadurch gänzlich verhindert, daß in dem den Abscheider abschließenden Deckel eine Erhebung ausgebildet ist und daß die Überlaufkante des Überlaufs im Bereich der Erhebung auf der Höhe der Abschlußlinie des Deckels angeordnet ist.

Der Abscheidegrad wird aber nicht nur durch den vertikalen Abstand, sondern auch durch den horizontalen Abstand zwischen Überlauf und erweitertem Ende der Zuführleitung beeinflußt. Günstig ist deshalb, den Überlauf und das erweiterte Ende der Zuführleitung etwa diagonal gegenüberliegend im Abscheider anzuordnen, da ein relativ langer Strömungsweg zwischen erweitertem Ende und Überlauf die Gefahr des Mitreißens von Trubstoff weiter verringert.

Durch die zylindrische und im Boden konische Ausbildung des Abscheiders ist dieser relativ kostengünstig herstellbar. Außerdem reichert sich der Trubstoff in einem bestimmten, überschaubaren Bereich an, aus dem er gezielt abgeführt werden kann. Die zylindrische Form des Abscheiders begünstigt außerdem eine weitgehend verwirbelungsarme Strömung, da keine Ecken oder Zwickel im Abscheider vorhanden sind. Eine solche Form wirkt sich aber auch günstig im Hinblick auf eine kurze Reinigungszeit aus.

Verfahrensseitig ist günstig, die Strömungsgeschwindigkeit der mit Trubstoff beladenen Würze in mehreren Stufen zu reduzieren und die Strömung zwischen den Stufen zum Boden hin umzulenken, da die Strömung beim Austritt aus dem erweiterten Ende der Zuführleitung in den Abscheider bereits eine relativ geringe Geschwindigkeit aufweist und so die nach unten gerichtete Strömung in aller Regel nicht mehr bis zu dem sich unten abgesetzten Trubstoff gelangen kann. Dadurch wird ein Aufwirbeln des bereits abgelagerten Trubstoffs und dessen Rückvermischung mit der trubstofffreien Würze weitgehend verhindert. Die zweite Stufe zum Reduzieren der Strömungsgeschwindigkeit erfolgt vorzugsweise beim Austritt der trubstoffbeladenen Würze aus dem erweiterten Ende der Zuführleitung bzw. beim Eintritt der mit Trubstoff beladenen Würze in den eine relativ große Querschnittsfläche aufweisenden Abscheider.

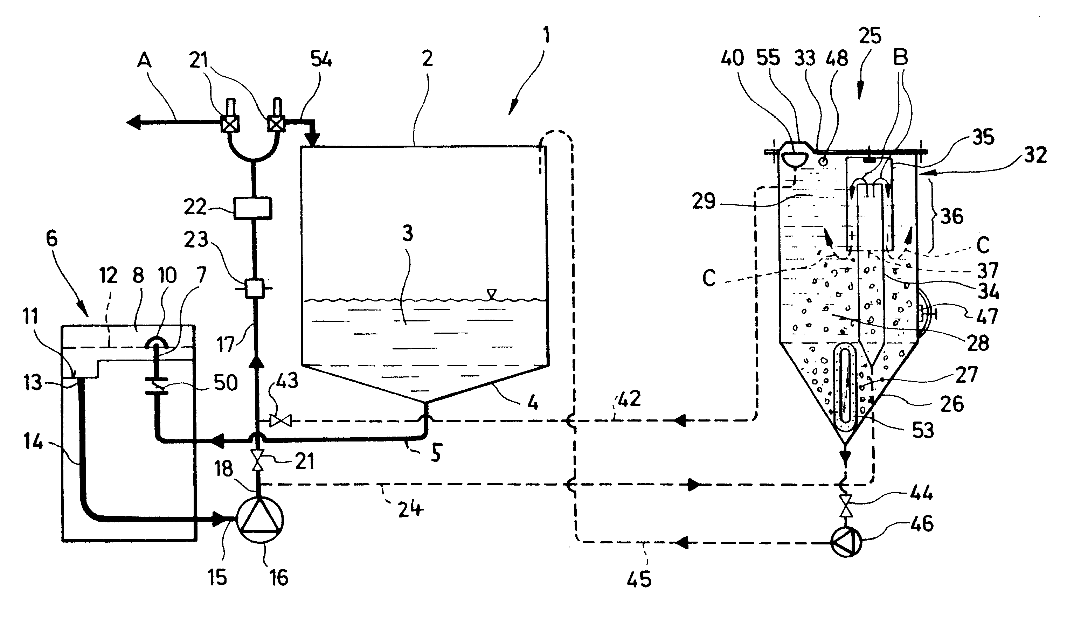

Ein Ausführungsbeispiel des Erfindungsgegenstandes wird nachfolgend anhand der Zeichnung näher erläutert, deren einzige Figur eine schematische Darstellung einer erfindungsgemäßen Vorrichtung zeigt.

In der einzigen Figur der Zeichnung ist eine Vorrichtung 1 zur Feststoffverringerung bei der Würzegewinnung zum Brauen von Bier dargestellt. Diese Vorrichtung dient zur offenen Abläuterung und weist deshalb den mit 6 bezeichneten Läuterturm auf. Die Erfindung ist aber genauso beim geschlossenen Pumpenabläutern anwendbar.

Mit 2 ist ein Läuterbottich bzw. -behälter bezeichnet, in dem ein Gemisch aus einer feststoffbeladenen Würze enthalten ist.

Der Boden 4 des Behälters 2 ist über eine Abzugsleitung 5 mit einem Läuterturm 6 verbunden. Das behälterferne Ende 7 der Abzugsleitung 5 erstreckt sich parallel zur Längsrichtung des Läuterturms 6 und endet knapp unterhalb der Oberseite 8 des Läuterturms. Zwischen dem Ende 7 und der Oberseite 8 ist ein Umlenker 10 angeordnet, der der aus dem Ende 7 der Abzugsleitung 5 austretenden Strömung der trubstoffbeladenen Würze eine zum Boden 11 des Läuterturms weisende Richtung gibt. Die Füllstandshöhe 12 des Läuterturms 6 ist durch das obere Ende 13 einer Ablaufleitung 14 festgelegt, deren unteres Ende 15 mit einer Förderpumpe 16 verbunden ist. Eine Leitung 17 verbindet das druckseitige Ende 18 der Förderpumpe 16 über unterschiedliche Armaturen, wie z.B. Auf-Zu-Ventile 21, 43 Meßzellen 22, 23, mit einer (nicht gezeigten) Sudpfanne oder einem Vorlaufbehälter (siehe Pfeil A in der Figur).

Mit 54 ist eine Trubwürzeleitung bezeichnet, die zu Beginn des Läutervorgangs zur Rückführung geöffnet wird, um die Ausbildung des Filterbettes zu ermöglichen.

Unmittelbar hinter der Förderpumpe 16 zweigt eine Zuführleitung 24 (gestrichelt dargestellt) von der Leitung 17 zu einem Abscheider 25 ab. Der Abscheider 25 ist ein zylindrischer Behälter, dessen Boden 26 konisch nach unten sich verjüngend ausgebildet ist. Der Abscheider 25 weist in seinem Inneren eine untere beruhigte Zone 27, eine darüber angeordnete Trennzone 28 sowie eine obere Zone 29 auf.

Die Zuführleitung 24 tritt in den Abscheider 25 an dessen Boden 26 ein und erstreckt sich im Inneren des Abscheiders 25 parallel zu dessen vertikaler Längsachse bis in Höhe des Kopfes 32. Der Abscheider ist mit einem Deckel 33 verschließbar.

Das im Inneren des Abscheiders 25 gelegene Ende 34 der Zuführleitung 24 weist im Vergleich zu der Zuführleitung 24 eine erweiterte Querschnittsfläche auf. Das erweiterte Ende 34 ist im Bereich der oberen Zone 29 mit einem glockenförmigen Umlenkelement 35 unter Ausbildung eines Überlappungsbereichs 36 überdeckt, wobei die Querschnittsfläche des Umlenkelements 35 die Querschnittsfläche des erweiterten Endes 34 übersteigt. Vorzugsweise ist die Ringfläche zwischen dem Umlenkelement 35 und dem erweiterten Ende 34 mindestens so groß wie die Querschnittsfläche des erweiterten Endes 34. Die Unterseite 37 des Umlenkelements 35 endet oberhalb der beruhigten Zone 27, gemäß der Figur zwischen der Trennzone 28 und der oberen Zone 29. Im Kopf 32 des Abscheiders 25 ist oberhalb der Unterseite 37 des Umlenkelements 35 ein Überlauf 40 zum Abführen der nahezu trubstofffreien Würze angeordnet. Gemäß der Figur befindet sich der glockenförmige Überlauf 40 im Bereich einer Erhebung 55, die im Deckel 33 ausgebildet ist. Die Überlaufkante des Überlaufs 40 liegt auf der Höhe der Deckelabschlußlinie, so daß der gesamte Abscheider bis unmittelbar an den Deckel hin gefüllt bleibt. Dadurch wird eine unerwünschte Sauerstoffaufnahme verhindert. Bei einer anderen Lösung, bei der der Deckel in einer Ebene durchgehend ausgebildet sein kann, wird die Überlaufkante des Überlaufs 40 knapp unter den Deckel endend angeordnet, so daß auch dabei eine Sauerstoffaufnahme verhindert wird, weil der Abscheider praktisch bis zum Deckel gefüllt werden kann.

Das erweiterte Ende 34 der Zuführleitung 24 und der Überlauf 40 sind im Abscheider etwa diagonal gegenüberliegend angeordnet, so daß am Überlauf 40 nahezu trubstofffreie Würze abgezogen werden kann.

Die obere Zone 29 im Kopf 32 des Abscheiders ist über den Überlauf 40 und eine daran angeschlossene Leitung 42 (gestrichelt dargestellt) und das Auf-Zu-Ventil 43 mit der Leitung 17 verbunden.

Der sich am Boden 26 des Abscheiders absetzende Trubstoff ist über ein weiteres Ventil 44 und eine Rückführleitung 45 mittels einer Förderpumpe 46 in den als Läuterbottich oder Maischefilter ausgebildeten Behälter 2 rückführbar.

Zum Beobachten der Trubstoffhöhe kann in Höhe der unteren beruhigten Zone 27 im konisch sich nach unten verjüngenden Boden 26 ein Schauglas 53 eingebaut sein. Zur besseren Reinigung des Abscheiders 25 ist in Höhe der Trennzone 28 eine verschließbare Öffnung 47 vorgesehen, von der aus der gesamte Abscheider gut zugänglich ist. Außerdem ist der Deckel 33 lösbar am Abscheider befestigt. Es ist auch möglich, das Umlenkelement 35 fest mit dem Deckel 33 zu verbinden, so daß das Umlenkelement zusammen mit dem Deckel abgenommen werden kann.

Nachfolgend wird das Verfahren zum Betreiben der Vorrichtung näher erläutert.

Bei der Würzegewinnung zum Brauen von Bier mit offenem Abläutern wird vom Boden 4 des Behälters 2 über die Abzugsleitung 5 eine trubstoffbeladene Würze in den Läuterturm 6 eingeleitet, deren Menge z.B. mittels einer Stellklappe 50 geregelt werden kann. Die trubstoffbeladene Würze tritt am Ende 7 der Abzugsleitung 5 aus und wird mittels des Umlenkers 10 umgelenkt. Das obere Ende 13 des Überlaufrohrs 14 bestimmt die Füllstandshöhe 12 der Würze im Läuterturm 6, so daß bei einem Überschreiten dieser Höhe Würze mittels der Förderpumpe 16 durch die Leitung 17 in die Sudpfanne (siehe Pfeil A) gefördert werden kann. Die Fördermenge kann z.B. über die Drehzahl der Förderpumpe 16 eingestellt werden. Mit Hilfe der Meßzellen 23 wird der Trubstoffgehalt der Würze ermittelt.

Bei einem Überschreiten eines zulässigen Trubstoffgehaltes in der Würze kann das Ventil 21 automatisch geschlossen und das Ventil 43 geöffnet werden, so daß die trubstoffbeladene Würze mit Hilfe der Förderpumpe 16 über die Zuführleitung 24 in den Abscheider geleitet wird. Die Strömungsgeschwindigkeit der trubstoffbeladenen Würze verringert sich ein erstes Mal, sobald die Würze von der Zuführleitung 24 in das erweiterte Ende 34 eintritt. Mit Hilfe des Umlenkelements 35 wird die trubstoffbeladene Würze um 180°, d.h. Zum Boden 26 des Abscheiders, umgelenkt, wie die Pfeile B in der Zeichnung verdeutlichen. Die trubstoffbeladene Würze strömt also an der Außenseite des erweiterten Endes 34 über die Länge des Überlappungsbereichs 36 nach unten. Der Abscheider arbeitet erst dann in seinem optimalen Betriebsbereich, wenn er bis in Höhe des Überlaufs 40 mit Trubstoff und Würze angefüllt ist. In einem solchen Fall bildet sich am Boden des Abscheiders die untere beruhigte Zone, in dessen Mitte die Trennzone und am Kopf die obere Zone aus, wobei der Trubstoffgehalt von unten nach oben abnimmt.

Tritt also an der Unterseite 37 des Umlenkelements 35 eine mit Trubstoff beladene Würze aus, verringert sich infolge der Querschnittserweiterung von der Ringfläche zwischen dem Umlenkelement und dem erweiterten Ende der Zuführleitung und der Querschnittsfläche des Abscheiders die Geschwindigkeit ein zweites Mal. Infolge ihrer höheren Dichte behalten die Trubstoffe ihre nach unten gerichtete Strömungsrichtung bei, so daß sie sich in der unteren Zone langsam absetzen. Die trubstofffreie Würze wird aber am Kopf des Abscheiders mittels des Überlaufs abgezogen, so daß die Würze gemäß der gestrichelten Pfeile C nach oben umgelenkt wird. Dabei trennen sich Trubstoffe und Würze, wobei erstere über die Trennzone 28 in die untere beruhigte Zone 27 absinken und letztere in die obere Zone 29 aufsteigt.

Die Reinheit der Würze am Überlauf ist dem vertikalen Abstand der Unterseite 37 des Umlenkelements von der Oberseite des Überlaufs 40 und dem horizontalen Abstand zwischen dem Umlenkelement und dem Überlauf in etwa proportional. Deshalb ist es günstig, die Unterseite des Umlenkelements über den Überlappungsbereich 36 relativ weit nach unten zu ziehen und das erweiterte Ende der Zuführleitung und den Überlauf etwa diagonal gegenüberliegend im Abscheider anzuordnen. Ein unverhältnismäßig langer Überlappungsbereich hat dagegen nachteilige Auswirkungen auf den von der Förderpumpe zu überwindenden Druckverlust und verkürzt die Trennzone sowie die untere beruhigte Zone beträchtlich. Dadurch besteht die Gefahr, daß die trubstoffbeladene Würze fast direkt in die beruhigte Zone eingeleitet wird, was ein Aufwirbeln der Trubstoffe und ein Rückvermischen in der trubstofffreien Würze zur Folge hat. Deshalb ist es günstig, die Unterseite des Umlenkelements etwa im oberen Drittel des Abscheiders enden zu lassen.

Wenn der Füllstand im Abscheider nicht weiter ansteigen soll, wird aus Kontinuitätsgründen die Menge der in den Abscheider eingeleiteten trubstoffbeladenen Würze der Menge der aus dem Abscheider abgezogenen trubstofffreien Würze sowie der Menge des abgezogenen Trubstoffes entsprechen. Die trubstofffreie Würze wird über die Leitung 42 und das Ventil 43 der Leitung 17 dann der Sudpfanne zugeführt.

Die Erfindung ist ebenso bei Maischefiltern und allgemein immer dort anwendbar, wo Vorklärungen durch Fällen von Feststoffen gewünscht werden.

## Ansprüche

1. Vorrichtung zur Verringerung der Feststoffanteile bei der Würzegewinnung zum Brauen von Bier mit einem Läuterbottich, aus dem Feststoff enthaltende Würze abgezogen wird, **dadurch gekennzeichnet,** daß dem Läuterbottich ein Abscheider (25) nachgeschaltet ist, mit einer unteren beruhigten Zone (27), in der sich Feststoffe anreichern, und mit einer oberen Strömungszone (29), und daß am Kopf (32) des Abscheiders (25) ein Überlauf für die nahezu trubstofffreie Würze und am Boden (26) des Abscheiders (25) ein Auslaß für die Feststoffe angeordnet ist.

2. Vorrichtung nach Anspruch 1, **dadurch gekennzeichnet,** daß Läuterbottich (6) und Abscheider (25) mittels einer Zuführleitung (24) verbunden sind, deren Ende (34) im Abscheider (25) querschnittsmäßig erweitert und parallel zu dessen vertikaler Längsachse angeordnet ist.

3. Vorrichtung nach Anspruch 1 und 2, **dadurch gekennzeichnet,** daß das erweiterte Ende (34) der Zuführleitung (24) zumindest teilweise mit Hilfe eines glockenförmigen Umlenkelements (35) unter Ausbildung eines Überlappungsbereichs (36) überdeckt ist, dessen Querschnittsfläche die des erweiterten Endes (34) übersteigt.

4. Vorrichtung nach einem der Ansprüche 1 bis 3, **dadurch gekennzeichnet,** daß die Unterseite (37) des Umlenkelements (35) oberhalb der beruhigten Zone (27) endet.

5. Vorrichtung nach einem der Ansprüche 1 bis 4, **dadurch gekennzeichnet,** daß im Kopf (32) des Abscheiders (25) oberhalb der Unterseite (37) des Umlenkelements (35) der Überlauf (40) zum Abführen der nahezu trubstofffreien Würze angeordnet ist.

6. Vorrichtung nach Anspruch 5, **dadurch gekennzeichnet,** daß der Überlauf (40) oberhalb des erweiterten Endes (34) der Zuführleitung, vorzugsweise 20 mm unterhalb eines den Abscheider (25) verschließenden Deckels (33), angeordnet ist.

7. Vorrichtung nach Anspruch 5, **dadurch gekennzeichnet,** daß in dem den Abscheider abschließenden Deckel (33) eine Erhebung (55) ausgebildet ist, und daß die Überlaufkante des Überlaufs (40) im Bereich der Erhebung auf der Höhe der Abschlußlinie des Deckels (33) angeordnet ist.

8. Vorrichtung nach einem der Ansprüche 1 bis 7, **dadurch gekennzeichnet,** daß das erweiterte Ende (34) der Zuführleitung (24) und der Überlauf (40) etwa diagonal gegenüberliegend im Abscheider (25) angeordnet sind.

9. Vorrichtung nach einem der Ansprüche 1 bis 8, **dadurch gekennzeichnet,** daß der Abscheider (25) zylindrisch mit konisch sich nach unten verjüngendem, die beruhigte Zone (27) bildenden Boden (26) ausgebildet ist.

10. Verfahren zur Verringerung des Feststoffanteils bei der Würzegewinnung zum Brauen von Bier, insbesondere in einer Vorrichtung nach einem der Ansprüche 1 bis 9, **dadurch gekennzeichnet,** daß die mit Feststoffen beladene Würze vor Eintritt in das Vorlaufgefäß oder in die Sudpfanne durch einen Abscheider geleitet wird, in dem die Trennung von Feststoff und Würze mittels einer strömungsberuhigten Zone erreicht wird.

11. Verfahren nach Anspruch 10, **dadurch gekennzeichnet,** daß das Abscheiden mittels Reduzieren der Strömungsgeschwindigkeit der mit Feststoffen beladenen Würze und ein zum Boden gerichtetes Umlenken der Strömung erfolgt, so daß sich die Feststoffe unten absetzen und die nahezu feststofffreie Würze darüber abgezogen werden kann.

12. Verfahren nach den Ansprüchen 10 und 11, **dadurch gekennzeichnet,** daß das Reduzieren der Strömungsgeschwindigkeit in zwei Stufen und das Umlenken der Strömung zwischen den Stufen erfolgt.

**Europäisches
Patentamt**

**EUROPÄISCHER
RECHERCHENBERICHT**

Nummer der Anmeldung

**EP 90 11 5832**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 029 624 (CIE INTERNATIONALE DE PARTICIPA-TION ET D'INVESTISSEMENT CIPARI) <br> * Fig.; Anspruch 1 * | 1,9-11 | C 12 C 7/14 |
| A | DE-C-1 355 41 (VALENTIN LAPP) <br> * Fig.; Seite 2, Absatz 5; Seite 2, Spalte 2 * | 1,11 | |
| A | DE-C-6 872 3 (PETER BENDER et al.) <br> * Figuren 2,4 * | 1-3 | |
| X | DE-A-2 525 445 (A. ZIEMANN GmbH) <br> * Fig.; Anspruch 1 * | 1 | |
| X | FR-A-4 102 03 (MASCHINENFABRIK F. WEIGEL) <br> * Fig.; Seite 2, Zeilen 76-100 * | 1 | |
| X | DE-A-2 849 956 (G. KRAUS) <br> * Figur 1; Seite 22, Zeilen 1-11 * | 1,5-7, 9-11 | |
| A | US-A-3 916 775 (A.A. MERZHANIAN et al.) <br> * Figur 1; Spalte 3, Zeilen 24-30 * | 1-3 | RECHERCHIERTE SACHGEBIETE (Int. Cl.5) <br><br> C 12 C |

Der vorliegende Recherchenbericht wurde für alle Patentansprüche erstellt

| Recherchenort | Abschlußdatum der Recherche | Prüfer |
|---|---|---|
| Den Haag | 15 November 90 | COUCKE A.O.M. |